# EUROPEAN PATENT APPLICATION

(11) **EP 2 397 765 A1**
(43) Date of publication of application: **21.12.2011**
(21) Application number: 11169354.5
(22) Date of filing: 09.06.2011
(51) Int. Cl.: F24B 1/18, F24B 1/183

(54) **Fuel-burning stove**

(30) Priority: 10.06.2010 GB 1009717
(71) Applicant: E.W.M. Limited, Shropshire SY9 5HH (GB)
(72) Inventor: Greenall, Jonathan, Bishops Castle, Shropshire SY9 5HH (GB)
(74) Representative: Lawrence, John

(57) **Abstract**

A fuel-burning stove (100) comprises a combustion chamber (112), a heat-exchanger (114) for heating water or other liquid by transfer of heat from combustion gases produced in the combustion chamber, and an output flue (118). The stove comprises selection means (107) for selecting one of two paths by which combustion gases may pass from the combustion chamber to the output flue. In a first mode of operation, combustion gases are conducted along a first path via a heat-exchanger (116) located below the combustion chamber to produce a hot-water supply in addition to space heating and/or cooking functionality. In a second mode of operation, combustion gases pass along a second path directly to the output flue. If a hot water supply is not required, the stove may be operated in the second mode, allowing greater efficiency and reduced emissions to be achieved.

## Description

The invention relates to fuel-burning stoves of the type which incorporates a liquid-heating arrangement such as a water-jacket, back-boiler or similar heat exchanger. Such stoves may burn wood, coal or biomass for example.

A fuel-burning stove which incorporates a water-heating arrangement may be used to provide space-heating, heat for cooking purposes, as well as a hot water supply. Although a hot water supply can be useful, such a stove has disadvantages compared to a similar stove without a water-heating arrangement. One disadvantage is that such a stove, once lit, provides a lower rate of heat generation for cooking and/or space-heating because some of the heat of combustion is diverted to water-heating. This means that space-heating takes longer and that the stove takes longer to reach a suitable temperature for cooking purposes. Another problem is that the presence of a water-heating arrangement reduces the operating temperature of the combustion chamber of the stove, leading to relatively inefficient combustion and greater smoke emissions. These disadvantages are present even if a user of the stove does not require a hot water supply when the stove is in use.

In one type of fuel-burning stove having a water-heating arrangement, a mechanism is provided which allows the heat transfer to the water-heating arrangement to be varied by varying the extent to which combustion gases interact with the heat-exchanger. However some heat is always provided to the water-heating arrangement when the stove is in operation; such mechanisms only provide a partial diversion of heat away from the water-heating arrangement. The operating temperature of the combustion chamber is therefore always lower than that of a similar stove without a water-heating arrangement, causing reduced combustion efficiency and greater smoke emissions, even when a hot water supply is not required.

The present invention provides a fuel-burning stove comprising a combustion chamber, an output flue and a heat-exchanger for transferring heat from combustion gases produced in the combustion chamber to liquid in the heat-exchanger, the stove being configured to provide first and second paths for conducting combustion gases from the combustion chamber to the output flue, the first path being arranged to conduct combustion gases from the combustion chamber via the heat-exchanger and the second path being arranged to conduct substantially all combustion gases from the combustion chamber directly to the output flue, and wherein the stove further comprises selection means for selecting one of the first and second paths in operation of the stove.

When the first path is selected, at least some of the combustion gases from the combustion chamber interact with the heat-exchanger so that liquid (typically water) in or driven through the heat-exchanger is heated. However when the selection means is operated to select the second path, substantially all the combustion gases from the combustion chamber pass directly to the output flue without interacting with the heat-exchanger. A user of the stove therefore has the choice of operating the stove either in a first operating state to provide hot water in addition to space-heating and cooking functionality, or in a second operating state which allows the stove to be rapidly brought into use for space-heating and/or cooking only and to be operated with higher combustion efficiency and lower emissions. If the user does not require hot-water, the stove may be operated in the second operating state to provide enhanced environmental performance: fuel is not wasted in providing hot water that is not required and the reduced amount of fuel that is consumed is combusted with higher efficiency than is achieved in the first operating state. CO₂ and smoke emissions may be therefore reduced and fuel consumption reduced by operating the stove in the second operating state when a hot water supply is not required.

Preferably the heat-exchanger is located beneath the combustion chamber when the stove is in its normal operating orientation. The space below the combustion chamber is the coolest part of a fuel-burning stove. By locating the heat-exchanger in this space, little or no heat can pass to the heat exchanger by convection or conduction from the combustion chamber, providing enhanced thermal isolation of the heat-exchanger and still higher combustion efficiency and even lower emissions when the stove is in the second operating state.

In a first embodiment, a grate of the combustion chamber is arranged to allow combustion gases to pass through the grate to an input of the heat-exchanger and the stove comprises a first conduit coupling an output of the heat-exchanger to the output flue. The first path is arranged to conduct combustion gases from the combustion chamber through the grate to the input of the heat-exchanger and subsequently from the output of the heat-exchanger to the output flue via the first conduit. The stove comprises a second conduit defining the second path, the second conduit communicating with the combustion chamber at a position vertically above the grate, and the selection means comprises obstructing means for selectively obstructing the second conduit.

If the obstructing means is not used to obstruct the second conduit, combustion gases from the combustion chamber follow the second path directly to the output flue. However if the obstructing means is operated to obstruct the second conduit, combustion gases from the combustion chamber are driven downwards through the grate of the combustion chamber and into the heat-exchanger so that a hot water supply may be produced. The combustion gases are subsequently conducted from the heat exchanger to the output flue along the first conduit. In order to assist flow of combustion gases along the first path (via the first conduit), a powered fan may be mounted in the first conduit.

In a second embodiment the stove comprises first, second and third conduits, the first conduit having an input arranged to receive combustion gases from the combustion chamber via the second conduit, a first output in communication with the output flue and a second output coupled to an input of the heat exchanger. The third conduit has a first end coupled to an output of the heat-exchanger and a second end coupled to the output flue. The selection means comprises obstructing means for selectively obstructing the first output of the first conduit or the second end of the third conduit.

In the second embodiment, the first path includes the second conduit, the second output of the first conduit, the heat exchanger and the third conduit. The heat-exchanger is preferably located beneath the combustion chamber (when the stove is in its normal operating orientation) as this is a convenient location and provides enhanced thermal isolation of the heat-exchanger when the stove is operated with the second path selected (i.e. so that substantially all the combustion gases pass through the second conduit directly to the output flue.)

The first and third conduits may be arranged side-by-side across the width direction of the stove, for example behind the combustion chamber when the stove is viewed from the front. Alternatively, the first and third conduits may be arranged so that they are mutually displaced along the depth direction of the stove when the stove is viewed from the front. For example the first conduit may be arranged behind the combustion chamber and the third conduit may be positioned behind the first conduit.

In order to assist flow of combustion gases along the first path (via the first conduit, the heat-exchanger and the third conduit), a powered fan may be mounted in the first conduit or the third conduit.

The selection means may be arranged for manual operation by a user, for example it may comprise a manually-operated damper.

In the first and second embodiments, the selection means may comprise a powered actuator for actuating the obstructing means. In this case, the stove may further comprise a temperature sensor and control means, the temperature sensor being arranged to measure the temperature of liquid in the heat-exchanger and to output a corresponding signal to the control means, and the control means being arranged to operate the powered actuator to select the second path when the temperature of liquid in the heat-exchanger exceeds a pre-determined threshold. This allows the temperature of liquid (e.g. water) in the heat-exchanger to be regulated so that it reaches a desirable temperature, or to prevent it from boiling for safety purposes.

The stove may comprise two or more sub-units, one of which comprises the heat-exchanger. This assists in transportation and assembly of the stove, as the heat-exchanger may be heavy and it may be necessary or desirable to transport and install the sub-unit comprising the heat-exchanger independently of the sub-unit or sub-units making up the remainder of stove.

A stove of the invention may be a wood-burning stove, or it may be a stove which burns coal, biomass or some other fuel.

Another aspect of the invention provides a kit comprising two or more sub-units, one of which comprises a heat-exchanger, and wherein the sub-units may be assembled to form a stove of the invention.

Embodiments of the invention are described below by way of example only and with reference to the accompanying drawings in which:
- Figure 1: shows a longitudinal section through a first example stove of the invention;
- Figures 2A to 2D: illustrate a second example stove of the invention; and
- Figure 3: shows a longitudinal section through a third example stove of the invention.

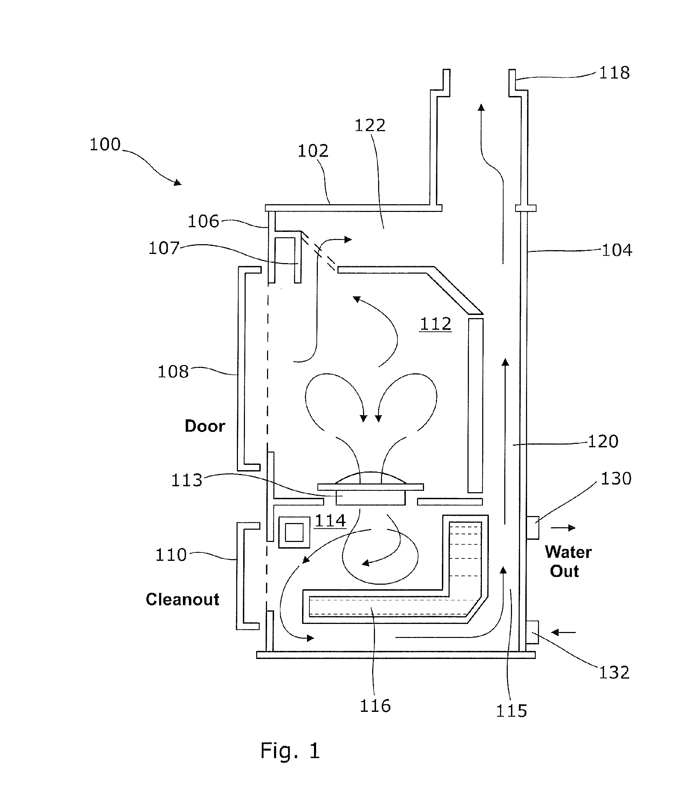

Figure 1 shows in diagrammatic form a longitudinal section through a first example fuel-burning stove 100 of the invention, the stove 100 being suitable for utilising wood as a fuel. The stove 100 has top, rear and front surfaces 102, 104, 106 respectively, and an output flue 118. A combustion chamber 112 is provided with a door 108 allowing access to grate 113 which supports burning logs or other forms of wood during use of the stove 100. A heat-exchanger 114 is located directly underneath the combustion chamber 112 and comprises a water-containing unit 116 through which water may be circulated via a water input 132 and a water output 130. The grate 113 of the combustion chamber 112 is arranged to allow combustion gases from the combustion chamber 112 to pass into the heat-exchanger 114 in a first mode of operation of the stove 100, so that the grate 113 is effectively an input (i.e. a combustion gas input) to the heat-exchanger 114. The heat-exchanger 114 has a (combustion gas) output 115 coupled to a first end of first conduit 120. A second end of the first conduit 120 is coupled to the output flue 118. The heat-exchanger 114 has a door 110 on the front side of the stove 100 allowing ash and other debris that has fallen through the grate 113 to be periodically removed.

A second conduit 122 communicates with the combustion chamber 112 at a position vertically above the grate 113 and is arranged to convey combustion gases directly to the output flue 118 in a second mode of operation of the stove 100. A moveable damper 107 may be moved to obstruct the second conduit 122 in the second mode of operation and serves as a selection means for selecting one or other of the two modes of operation of the stove 100.

The stove 100 operates as follows. If a user requires a hot water supply in addition to space-heating and/or cooking functionality (for example part of upper surface 102 may be a cooking surface), the damper 107 is moved so that it obstructs the second conduit 122 (i.e. such that it occupies the position indicated by the dotted lines in Figure 1). In this first mode of operation, combustion gases produced by combustion of wood on the grate 113 are driven down through the grate 113 into the heat-exchanger 114 in which heat energy is transferred from the combustion gases to water in the water-filled unit 116 of the heat exchanger 114. The combustion gases then pass out the output 115 of the heat-exchanger 114 and into the first conduit 120. The combustion gases then pass up the first conduit 120 to the output flue 118. In this first mode of operation, combustion gases follow a first path to the output flue 118 via the grate 113, the heat-exchanger 114 and the first conduit 120.

If the use does not require a hot-water supply in addition to space-heating and/or cooking functionality, the stove 100 may be operated in a second mode by ensuring that the damper 107 is in a position such that it does not obstruct the second conduit 122. In the second mode of operation, substantially all the combustion gases generated in the combustion chamber 112 follow a second path along the second conduit 122 directly to the output flue 118 without thermal contact with the heat-exchanger 114. This allows the combustion chamber 112 to operate at higher temperature than is the case in the first mode of operation. Combustion efficiency is increased and smoke emissions reduced compared to the first mode of operation. The second mode of operation of the stove 100 allows the stove 100 to be brought relatively quickly into use for cooking and/or space heating because all the available heat energy from combustion gases is directed to the output flue 118 and none to the heat-exchanger 114.

The damper 107 is effectively selection means for selecting one of the two mode of operation of the stove 100, i.e. it may be used to select the first path or the second path by which combustion gases pass from the combustion chamber 112 to the output flue 118 when the stove is in use.

A powered fan (not shown) may be provided in the first conduit 120 to assisting drawing combustion gases from the combustion chamber 112 through the grate 113 and generally along the first path from the combustion chamber 112 to the output flue 118.

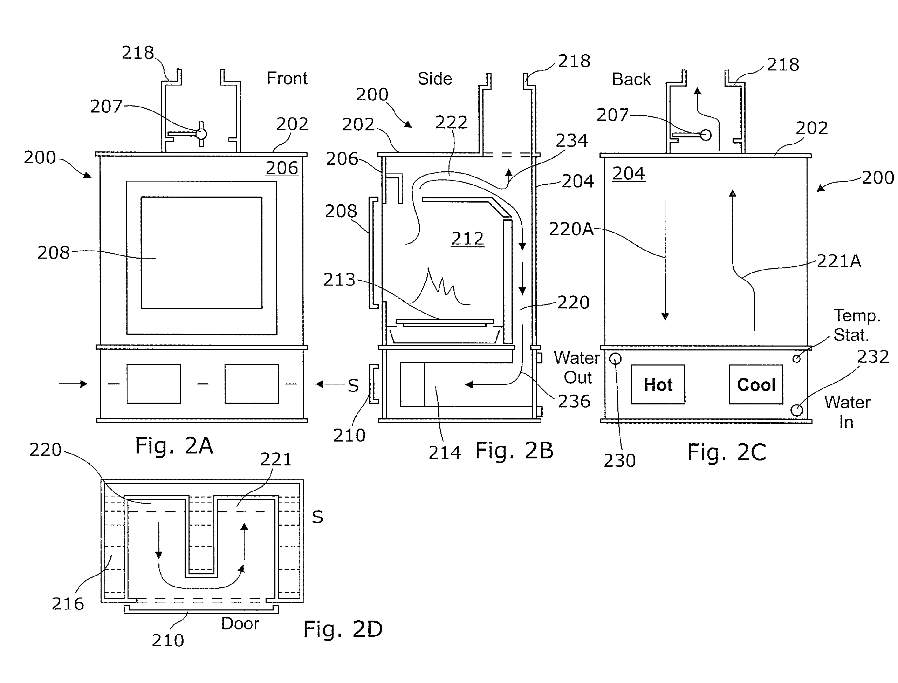

Figures 2A and 2C show front and back diagrammatic views respectively of a second example stove 200 of the invention. Figure 2B is a longitudinal section through the stove 200 and Figure 2D is a section taken along the plane S in Figure 2A. In Figures 2A-2D parts of the stove 200 corresponding to parts of the stove 100 in Figure 1 are labelled with reference signs differing by 100 from those labelling the corresponding parts in Figure 1.

The stove 200 comprises a first conduit 220 arranged to receive combustion gases from a combustion chamber 212 via a second conduit 222. The first conduit 220 has a first output 204 in communication with output flue 218 and a second output 236 coupled to a combustion gas input of heat-exchanger 214, which is located directly below the combustion chamber 212. A third conduit 221 has a first end coupled to a combustion gas output of the heat-exchanger 214 and a second end coupled to the output flue 218.

The stove 200 further includes a moveable damper 207 for selectively obstructing the first output 234 of the first conduit 220 or the second end of the third conduit 221. The damper 207 therefore allows a user to select one of two modes of operation of the stove 200. In the first mode, the damper 207 is positioned to obstruct the first output 234 of the first conduit 220 so that combustion gases follow a first path to the output flue 218, from the combustion chamber 212, along the second conduit 222, along the first conduit 220, through the heat-exchanger 214 and then along the third conduit 221 to the output flue 218. The first mode of operation therefore provides a hot water supply in addition to space-heating and/or cooking functionality.

The second mode of operation of the stove 200 is selected by moving the damper 207 so that it obstructs the second end of the third conduit 221. In the second mode of operation, substantially all the combustion gases from the combustion chamber 212 follow a second path to the output flue 218 wherein the combustion gases pass directly to the output flue 218 along the second conduit 222 without interacting with the heat-exchanger 214. As with the stove 100 of Figure 1, the first mode of operation allows the stove 200 to be rapidly brought into use for cooking and/or space-heating. For example, the whole or part of upper surface 202 may be a cooking surface. Since no combustion heat is used to heat water in the heat-exchanger 214 in the second mode, combustion is achieved with relatively high efficiency and low smoke emissions.

In Figure 2D, the positions of the first and third conduits 220, 221 are indicated by arrows 220A and 221A respectively. The conduits 220, 221 are mutually displaced along the width dimension of the stove 200, such that they are adjacent to each other and behind the combustion chamber 212.

The damper 207 may be manually operable as a means of selecting one of the two modes of operation of the stove 200. Alternatively, a powered actuator may be provided to operate the damper 207. A temperature sensor such as a thermistor may be mounted in the heat-exchanger 214 to measure the water the water temperature therein and to output a corresponding signal to control means such that the stove is switched from the first mode of operation to the second mode when water in the heat-exchanger 214 reaches a pre-determined temperature. For example, the pre-determined temperature could be 99°C so that water in the heat exchanger is prevented from boiling for safety purposes. In this case the control means would be arranged to operate the actuator to move the damper 207 from a position in which it obstructs the first conduit 220 to a position in which it obstructs the third conduit 221 so that combustion gases are directed away from the heat-exchanger 214. The thermistor could form part of a voltage divider to provide a floating voltage indicative of the temperature of water in the heat-exchanger. The control means could for example be an op-amp comparator which compares the floating voltage to a reference voltage and outputs a control signal to the actuator to move the damper 207 appropriately when the floating voltage exceeds the reference voltage. A similar temperature regulation arrangement may be provided in the stove 100 of Figure 1.

In order to assist or provide movement of combustion gases through the stove 200 when it is in the first mode of operation, one or more powered fans may be provided in the first conduit 220 and/or the third conduit 221 to drive combustion gases along the first path from the combustion chamber 212 to the output flue 218.

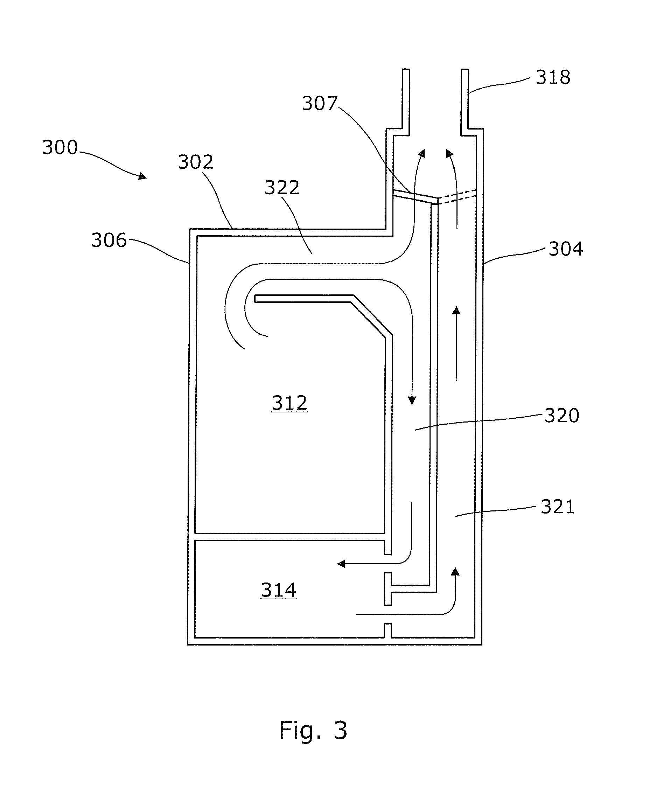

Figure 3 diagrammatically shows a longitudinal section through a third example stove 300 of the invention. The stove 300 is similar to the stove 200 of Figures 2A-2D. Parts of the stove 300 which correspond to parts of the stove 200 are labelled with reference signs which differ by 100 from those labelling the corresponding parts in Figure 2.

The stove 300 has first, second and third conduits 320, 322 and 321 respectively which have the same functions as the conduits 220, 222 and 221 respectively of the stove 200 of Figures 2A-2D. A moveable damper 307 may be used to obstruct either the first conduit 320 or the third conduit 321 to define first and second paths respectively for combustion gases originating from combustion 312 and passing to output flue 318. The conduits 320, 321 are mutually displaced along the length dimension of the stove 300, the first conduit 320 being disposed behind combustion chamber 312 and the third conduit 321 being disposed behind the first conduit 320, when the stove 300 is viewed from the front.

A powered fan (not shown) may be provided in the first 320 and/or third 321 conduits to assist or provide movement of combustion gases along the first path through the stove 300. The temperature regulation means described above in relation to the stove 200 of Figures 2A-2D may also be incorporated into the stove 300 so that combustion gases are diverted away from the heat-exchanger 314 when water or other liquid in the heat-exchanger 314 reaches a pre-determined temperature.

## Claims

1. A fuel-burning stove comprising a combustion chamber, an output flue and a heat-exchanger for transferring heat from combustion gases produced in the combustion chamber to liquid in the heat-exchanger, the stove being configured to provide first and second paths for conducting combustion gases from the combustion chamber to the output flue, the first path being arranged to conduct combustion gases from the combustion chamber via the heat-exchanger and the second path being arranged to conduct substantially all combustion gases from the combustion chamber directly to the output flue, and wherein the stove further comprises selection means for selecting one of the first and second paths in operation of the stove.

2. A stove according to claim 1 wherein the heat-exchanger is located beneath the combustion chamber when the stove is in its normal operating orientation.

3. A stove according to claim 2 wherein a grate of the combustion chamber is arranged to allow combustion gases to pass through the grate to an input of the heat-exchanger and wherein the stove comprises a first conduit coupling an output of the heat-exchanger to the output flue, the first path being arranged to conduct combustion gases from the combustion chamber through the grate to the input of the heat-exchanger and subsequently from the output of the heat-exchanger to the output flue via the first conduit, and wherein the stove comprises a second conduit defining the second path, the second conduit communicating with the combustion chamber at a position vertically above the grate and the selection means comprising obstructing means for selectively obstructing the second conduit.

4. A stove according to claim 3 further comprising a powered fan amounted within the first conduit and arranged to provide or assist movement of combustion gases through the first conduit in operation thereof.

5. A stove according to claim 1 or claim 2 comprising first, second and third conduits, the first conduit having an input arranged to receive combustion gases from the combustion chamber via the second conduit, a first output in communication with the output flue and a second output coupled to an input of the heat exchanger, and the third conduit having a first end coupled to an output of the heat-exchanger and a second end coupled to the output flue, and wherein the selection means comprises obstructing means for selectively obstructing the first output of the first conduit or the second end of the third conduit.

6. A stove according to claim 5 wherein the first and third conduits are mutually displaced across the width of the stove.

7. A stove according to claim 5 wherein the first and third conduits are mutually displaced along the depth direction of the stove.

8. A stove according to any of claims 5 to 7 further comprising a powered fan mounted within the first conduit or the third conduit and arranged to provide or assist movement of combustion gases along the first path in operation thereof.

9. A stove according to any preceding claim, wherein the selection means is arranged for manual operation.

10. A stove according to any of claims 3 to 8 wherein the selection means comprises a powered actuator for actuating the obstructing means.

11. A stove according to claim 10 wherein the stove further comprises a temperature sensor and control means, the temperature sensor being arranged to measure the temperature of liquid in the heat-exchanger and to output a corresponding signal to the control means and the control means being arranged to operate the powered actuator to select the second path when the temperature of liquid in the heat-exchanger exceeds a pre-determined threshold.

12. A stove according to any preceding claim comprising two or more sub-units, wherein one sub-unit comprises the heat exchanger.

13. A stove according to any preceding claim wherein the stove is a wood-burning stove.

14. A kit comprising two or more sub-units, one sub-unit comprising a heat-exchanger, and wherein the sub-units may be assembled to form a stove according to any preceding claim.
